# EUROPEAN PATENT SPECIFICATION

(11) **EP 2 142 058 B1**
(45) Date of publication and mention of the grant of the patent: **10.11.2010**
(21) Application number: 08736893.2
(22) Date of filing: 08.04.2008
(51) Int. Cl.: A47J 43/07

(54) **IMPROVEMENTS IN OR RELATING TO STAND MIXERS**
VERBESSERUNGEN BEI ODER IM ZUSAMMENHANG MIT STÄNDERRÜHRGERÄTEN
BATTEURS SUR SOCLE PERFECTIONNÉS

(30) Priority: 27.04.2007 GB 0708150
(43) Date of publication of application: 13.01.2010
(73) Proprietor: Kenwood Limited, Havant Hampshire PO9 2NH (GB)
(72) Inventor: EDEN, Roland, Hampshire PO9 2NH (GB)
(74) Representative: Marsh, Robin Geoffrey
(86) International application number: PCT/GB2008/001206
(87) International publication number: WO 2008/132429

(56) References cited:
- US-A- 2 013 887
- US-A- 2 278 187
- US-A- 5 782 558
- US-A- 5 957 578
- US-A1- 2004 001 387

## Description

This invention relates to stand mixers, by which is meant the kind of motor-driven kitchen machine in which a generally C-shaped casing provides a pedestal-like base for a mixing bowl, a generally upright support portion and a head unit which extends overhead of the pedestal and supports a downwardly-facing drive outlet for driving one or more mixer tools that perform a planetary mixing action in the bowl.

Such stand mixers are well known and have been well established in use for many years. Over the years, mixers of this kind have been adapted and developed so as to perform an ever broadening range of functions, and many such devices incorporate, for example, a plurality of drive outlets running at different speeds and with differing torque characteristics enabling them to perform a wide spread of operations.

Certain recently developed stand mixer arrangements exhibit still broader operational capability, resulting from the inclusion of heating means provided to permit ingredients in the bowl to be heated whilst being subjected to the planetary mixing action; the heating being selectable so as to completely cook, to partially cook, or to merely warm ingredients.

Document US-2004/001387 discloses a stend mixer according to the preamble of claim 1.

Whether or not heating facilities are provided in any given stand mixer, however, there is a need for the head part of the machine to be movable relative to the remainder of the casing (and in particular relative to the bowl-supporting pedestal) in order to facilitate the insertion and removal of the mixing tools and the bowl.

Typically, this movement of the head part relative to the remainder of the casing is initiated by user-operation of a mechanical latch, which is actuated in order to release the head for pivoting motion upwards, in the general plane of the C-shaped housing, under the influence of a spring.

The head parts of such machines are relatively heavy, and thus it has been found necessary to provide a relatively strong spring to urge the head part upwards when the latch is actuated. This arrangement presents difficulties, however, because the relatively heavy head part can move upwards quite rapidly, only to be stopped abruptly when it reaches the end of its travel. Usually, the end of the head part's travel is defined by a relatively small region of contact between a portion of the head part and a stationary part of the casing, and this can result in the transmission of significant force to the remainder of the casing, thereby jolting the machine and possibly causing spillage of ingredients from the mixing bowl, or even displacement of the machine relative to a work-top or other surface on which it is being used.

Further difficulties arise with such arrangements because some users of these relatively sophisticated machines do not regard the sudden and relatively uncontrolled movement of the head part as being concomitant with the cost and image thereof.

The aforementioned difficulties can be exacerbated by the relatively modern practice of locating the drive motor of the stand mixer in the head part, as opposed to the more conventional practice of locating the motor in an upright part of the generally C-shaped casing, because locating the motor in the head part of the stand mixer increases the weight of the mobile head part relative to the stationary remainder of the casing.

It is an object of this invention to provide a stand mixer in which the above-mentioned difficulties are reduced or eliminated.

According to the invention from one aspect there is provided a stand mixer having a pedestal for a mixing bowl; an electric motor and a head part disposed, in an operational position, overhead of the pedestal and supporting a drive outlet disposed to face the pedestal and capable of being driven by said motor to impart a planetary mixing action to one or more tools suspended into the bowl therefrom; the stand mixer further comprising a mechanism for displacing said head part pivotally away from said pedestal and out of said operational position, said mechanism comprising latching means for releasably latching said head part to the casing in said operational position and resilient means for urging said head part away from said pedestal; and characterised by damping means for restricting the rate of movement of said head part. By this means, the aforementioned abrupt stopping of the head part is countered, since the damping means counteracts, at least in part, the powerful resilient urge provided by the resilient means.

Preferably, the damping means is effective to restrict the rate of movement of said head part over at least a major portion of said movement.

In some preferred embodiments, the damping means comprises an hydraulic damper. Further, in such embodiments, it is preferred that the damper comprises a piston movable in a tubular housing that contains hydraulic fluid; the piston and the housing being respectively coupled to the head part and to another part of said casing, or vice-versa.

It is further preferred that the damping action of the damper means is inhibited when the head part is moved back towards said operational position. This is accomplished in one preferred embodiment by providing a bypass aperture through said piston for said fluid and a valve plate adapted to close said aperture when the head part moves away from said pedestal and out of said operational position.

It is particularly preferred that said damping means and said resilient means are co-sited in a generally upright part of said casing, and it is further preferred that space to accommodate said damping means and said resilient means in said generally upright casing part is provided by housing said motor in the head part of the stand mixer.

In order that the invention may be clearly understood and readily carried into effect, certain embodiments thereof will now be described, by way of example only, with reference to the accompanying drawings, of which:
Figure 1 shows, in perspective view, a conventional stand mixer;
Figure 2 shows the stand mixer of Figure 1 from a frontal elevation;
Figures 3a and 3b show schematically, partly in side elevation and partly in cross-section, a stand mixer in accordance with one example of the present invention; and
Figure 3c shows in detail a damping mechanism used in the stand mixer of Figures 3a and 3b.

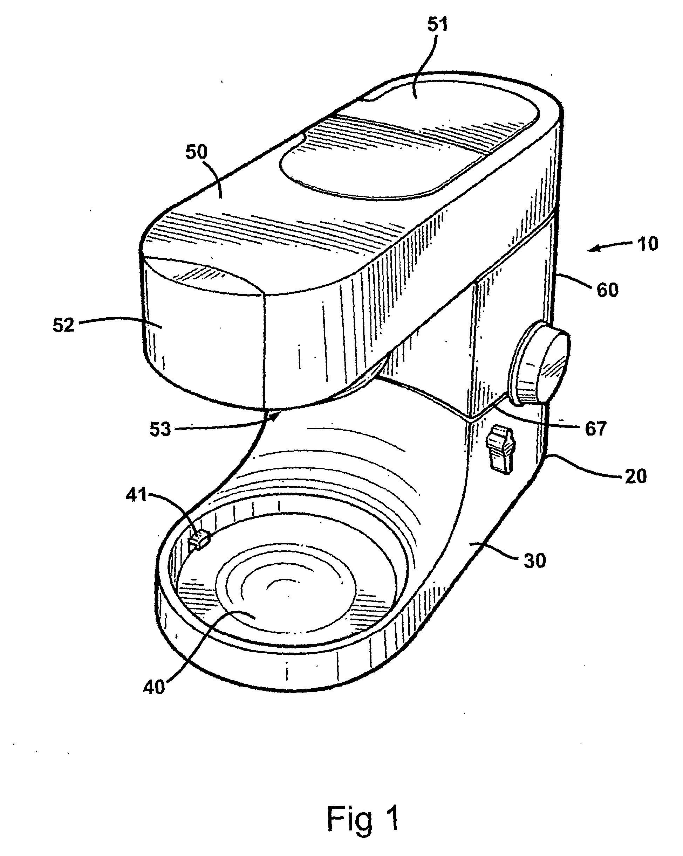

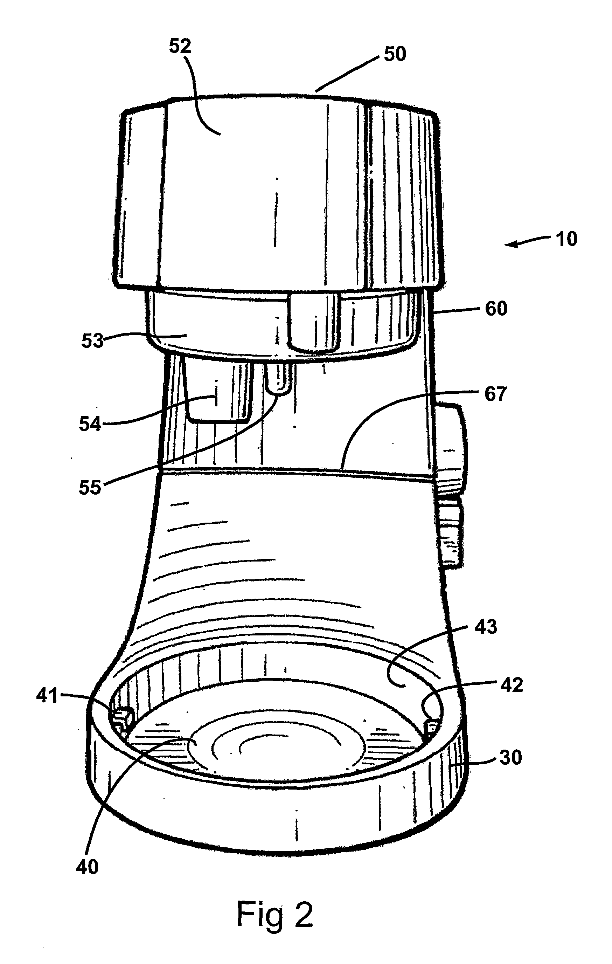

Referring now to Figures 1 and 2, in which corresponding features carry the same reference numbers, a conventional stand mixer 10 comprises a generally C-shaped casing 20, comprising a base part 30, which supports a bowl pedestal 40, and a head part 50, linked by a generally upright casing portion 60. The casing 20 encloses an electric drive motor (which is not shown but is usually located in the generally upright portion 60 of the casing 20) and gearing (not shown) which conveys the motive power supplied by the motor to a plurality of drive outlets to which various tools can be attached to perform a wide variety of tasks in the kitchen.

In this particular example, the head part 50 supports a high-speed blender drive outlet (behind covers 51), a slow-speed mincer drive outlet (behind cover 52) and a planetary drive, intended for food mixing, at 53 (overhead of the pedestal 40) although it will readily be appreciated that more, fewer and/or different drive outlets can be provided in accordance with desired functionality of the stand mixer.

A shanked mixing tool, attached as is conventional, to a socket 54 of the outlet 53, will depend in use into a mixing bowl placed on the pedestal 40, and is configured to rotate about both the axis of the socket 54 and the central axis 55 of the outlet 53, thus performing a planetary mixing action. The necessary relationships between the relative shapes and dimensions of the bowl and the mixing tool to ensure thorough and repeatable mixing of ingredients are well known and established in use over many years.

As shown, the stand mixer 10 is, in this example, provided with a pair of latches 41, 42 extending from an outer wall 43 of the pedestal 40, which latches co-operate with components on the base of the bowl to form a bayonet latching system which ensures firm and ready location of the bowl on its platform. Other latching systems, such as screw-threading for example, can be used as an alternative to bayonet latching if preferred.

The generally upright casing portion 60 of the housing 20 is configured with a break line 67, and a suitable mechanism to permit the head part 50 of the stand mixer to be hinged away from the pedestal 40, in order to facilitate the insertion and removal of the mixing tools and the bowl.

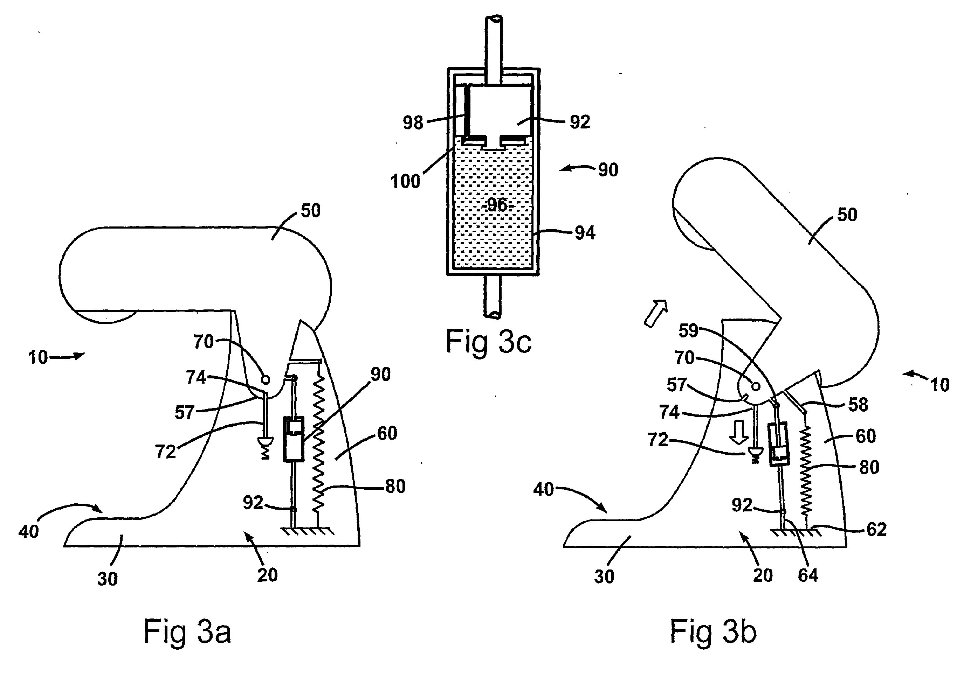

One embodiment of the present invention will now be described with additional reference to Figures 3a and 3b, which use the same reference numbers as Figures 1 and 2 for equivalent components and show, in schematic, simplified and part cross-sectional view, salient elements of a stand mixer an accordance with one example of the invention.

Referring now to Figure 3a, which shows the stand mixer 10 in its operational position, there is represented a hinge 70 about which the head part 50 can move pivotally relative to the remaining parts of the casing 20. The head part is releasably latched in its operational position by means shown schematically as a head release plunger 72 having an extremity 74 thereof in engagement with a notch 57 formed at an appropriate site on the periphery of the head part 50. When the plunger 72 is depressed sufficiently to disengage its extremity 74 from the notch 57, the head part 50 is raised, under the influence of a spring 80, away from the pedestal 40 and out of the operational position shown in Figure 3a, towards the fully opened position represented in Figure 3b. The spring 80 is connected between a mounting 58, attached to the head part 50, and a mounting 62 near the base of the generally upright and stationary section 60 of the casing 20.

Also connected between respective mounting points on the head part 50 and near the base of the generally upright portion 60 of the casing 20 is a damper 90. The mounting points for the damper are shown at 59 and 64 respectively and it will be seen that, in this embodiment of the invention, the spring 80 and the damper 90 are disposed in parallel, and are substantially co-sited within the generally upright portion 60 of the casing 20. Room to accommodate the spring 80 and the damper 90 at that location has been provided in this example by siting the stand mixer's drive motor in the head part 50, whereas hitherto it has been more common to locate the drive motor in the generally upright portion 60 of the casing 20. The damper 90 is pivotally mounted, as indicated at 92, to accommodate a relatively small amount of lateral motion needed to track the movement of the head part 50.

It will be appreciated that the spring 80 may, if desired, be coiled around the damper 90, to provide a compact unit, though provision must in such circumstances be made to accommodate the small amount of pivotal motion of the damper 90 about its pivot 92.

In any event, it will be appreciated that this embodiment of the invention is effective to provide the movement of head part 50 relative to the remainder of the casing 20 with smooth and controlled operation, whereby the strong action of the spring is counteracted to a degree sufficient to eliminate sudden movements and stops the head part smoothly 50 when it reaches the extreme of its opened position as depicted in Figure 3b. It will further be appreciated that such smooth motion is not only desirable from the standpoint of avoiding the transmission of sudden jerking movements to the stand mixer 10, but also provides a controlled and pleasing motion commensurate with the perceived image of these relatively costly machines.

The damping means such as 90 can be configured to provide differing degrees of damping in dependence upon the opening angle of the machine, i.e. in dependence upon the distance of the head part 50 from the pedestal 40. In one such arrangement, the damping force is arranged to be relatively small as the head part 50 leaves the operational position depicted in Figure 3a, consequent upon delatching of the latch system provided by the components 57, 72 and 74, and to increase steadily as the head part 50 moves towards the fully opened position depicted in Figure 3b such that, at the point of maximum opening, the damping force substantially counteracts the spring force.

The head part 50 is intended to be returned under manual pressure from its opened position as depicted in Figure 3b to its operational position as depicted in Figure 3a, and in this embodiment the damping operation is inhibited for motion in that direction. As illustrated schematically in Figure 3c, the damper 90 comprises a piston 92 which runs in the bore of a cylindrical housing 94 containing hydraulic fluid 96. The damping operation is inhibited by providing a by-pass passage 98 for the fluid 96 through the piston 92; the passage being open during the upwards movement of the piston 92 associated with closure of the head part 50 into its operational position. The passage 98 is closed, by means of a valve plate 100, when the piston moves downwards during movement of the head part 50 towards its opened position, thereby ensuring that the required damping operation is achieved.

## Claims

1. A stand mixer (10) having a casing (20) including a pedestal (40) for a mixing bowl; an electric motor and a head part (50) disposed, in an operational position, overhead of the pedestal (40) and supporting a drive outlet (53) disposed to face the pedestal (40) and capable of being driven by said motor to impart a planetary mixing action to one or more tools suspended into the bowl therefrom; the stand mixer (10) further comprising a mechanism (72, 80) for displacing said head part (50) pivotally away from said pedestal (40) and out of said operational position, said mechanism comprising latching means (72, 74, 57) for releasably latching said head part (50) to the casing (20) in said operational position and resilient means (80) for urging said head part (50) away from said pedestal (40); and **characterised by** damping means (90) for restricting the rate of movement of said head part (50).

2. A stand mixer according to claim 1, wherein the damping means (90) is adapted to restrict the rate of movement of said head part (50) over at least a major portion of said movement.

3. A stand mixer according to claim 1 or claim 2, wherein the damping means (90) comprises an hydraulic damper (92, 94, 96).

4. A stand mixer according to claim 3, wherein the damper (90) comprises a piston (92) movable in a tubular housing (94) that contains hydraulic fluid (96); the piston (92) and the housing (94) being respectively coupled to the head part (50) and to another part of said casing (20), or vice-versa.

5. A stand mixer according to any preceding claim, further including means (98, 100) for inhibiting the damping action of the damping means (90) when the head part (50) is moved back towards said operational position.

6. A stand mixer according to claims 4 and 5, further comprising a bypass passage (98) through said piston (92) for said fluid (96) and a valve plate (100) adapted to close said passage (98) when the head part (50) moves away from said pedestal (40) and out of said operational position.

7. A stand mixer according to any preceding claim, wherein said damping means (90) and said resilient means (80) are co-sited in a generally upright part (60) of said casing (20).

8. A stand mixer according to claim 7, wherein space to accommodate said damping means (90) and said resilient means (80) in said generally upright casing part (60) is provided by housing said motor in the head part (50) of the stand mixer (10).

9. A stand mixer according to any preceding claim, wherein said damping means (90) is adapted to provide different degrees of damping at different points of said movement.

## Patentansprüche

1. Ständerküchenmaschine (10) mit einem Gehäuse (20) einschließlich eines Sockels (40) für eine Mischschüssel, eines Elektromotors und eines Kopfstücks (50), welches in seiner Betriebsstellung über dem Sockel (40) steht und eine dem Sockel (40) gegenüberliegende Antriebsaufnahme (53) aufweist und von dem besagten Motor angetrieben kann, so dass ein von der Aufnahme in die Schüssel tauchendes Werkzeug bzw. mehrere solche Werkzeuge in eine Planetenumlaufbahn versetzt werden kann bzw. können, wobei die Ständerküchenmaschine (10) des Weiteren einen Mechanismus (72, 80) aufweist, mit dem das besagte Kopfstück (50) von dem besagtem Sockel (40) weg und aus seiner Betriebsstellung heraus verschwenkt werden kann, wobei der besagte Mechanismus Verriegelungsmittel (72, 74, 57) zur lösbaren Verriegelung des besagten Kopfstücks (50) mit dem besagten Gehäuse (20) in seiner Betriebsstellung sowie nachgiebige Mittel (80) zum Abdrücken des besagten Kopfstücks (50) von dem besagten Sockel (40) weg aufweist, **gekennzeichnet durch** Dämpfungsmittel (90) zur Beschränkung der Geschwindigkeit, mit der das besagte Kopfstück (50) verstellt werden kann,

2. Ständerküchenmaschine gemäß Anspruch 1, bei dem das Dämpfungsmittel (90) so ausgelegt ist, dass die Bewegungsgeschwindigkeit des besagten Kopfstücks (50) über wenigstens einen wesentliche Teil des Bewegungsbereichs eingeschränkt wird.

3. Ständerküchenmaschine gemäß Anspruch 1 oder Anspruch 2, bei dem das Dämpfungsmittel (90) einen hydraulischen Dämpfer (92, 94, 96) mit einbezieht.

4. Ständerküchenmaschine gemäß Anspruch 3, in der der Dämpfer (90) einen Kolben (92) einbezieht, der beweglich in einem rohrförmigen Gehäuse (94) angeordnet ist, das Hydraulikflüssigkeit (96) enthält, wobei der Kolben (92) bzw. das Gehäuse (94) mit dem Kopfstück (50) bzw. einem anderen Teil des besagten Gehäuses (20) oder umgekehrt gekoppelt ist.

5. Ständerküchenmaschine gemäß einem beliebigen der vorhergehenden Ansprüche, des weiteren umfassend Mittel (98, 100 zur Unterdrückung der Dämpfungswirkung des Dämpfungsmittels (90), wenn das Kopfstück (50) wieder in die besagte Betriebsstellung zurückgestellt wird.

6. Ständerküchenmaschine gemäß Anspruch 4 und 5, des Weiteren umfassend eine Überströmpassage (98) durch den besagten Kolben (92) für die besagte Flüssigkeit (96) und eine Ventilplatte (100), die so ausgeführt ist, dass sie die besagte Überströmpassage (98) schließt, wenn das Kopfstück (50) von dem besagte Sockel (40) weg und aus der besagten Betriebsstellung gedrückt wird.

7. Ständerküchenmaschine gemäß einem der vorhergehenden Ansprüche, bei dem das besagte Dämpfungsmittel (90) und das besagte nachgiebige Mittel (80) nebeneinander in dem im Wesentlichen lotrecht verlaufenden Teil (60) des besagten Gehäuses (20) angeordnet sind.

8. Standerküchenmaschine gemäß Anspruch 7, bei dem Raum zur Unterbringung des besagten Dämpfungsmittels (90) und des besagten nachgiebige Mittels (80) In dem im Wesentlichen lotrecht verlaufenden Teil (60) des Gehäuses durch Anordnung des besagten Motors im Kopfstück (50) der Ständerküchenmaschine geschaffen wird.

9. Ständerküchenmaschine gemäß einem beliebigen der vorhergehenden Ansprüche, bei das besagte Dämpfungsmittel (90) eine unterschiedlich starke Dämpfungswirkung an unterschiedlichen Stellen des besagten Bewegungsbereichs ausübt,

## Revendications

1. Batteur sur pied (10) ayant un boîtier (20) comprenant un socle (40) pour un bol mélangeur ; un moteur électrique et une partie tête (50) se trouvant, en une position de fonctionnement, au-dessus du socle (40) et supportant une sortie d'entraînement (53) se trouvant orientée vers le socle (40) et en mesure d'être entraînée par ledit moteur pour imprimer une action de mélange planétaire à un ou plusieurs outils suspendus dans le bol en provenance de celle-ci ; le batteur sur pied (10) comportant par ailleurs un mécanisme (72, 80) destiné à déplacer ladite partie tête (50) de manière pivotante à distance dudit socle (40) et hors de ladite position de fonctionnement, ledit mécanisme comportant des moyens de verrouillage (72, 74, 57) permettant de verrouiller de manière libérable ladite partie tête (50) au boîtier (20) dans ladite position de fonctionnement et un moyen élastique (80) permettant de solliciter ladite partie tête (50) à distance dudit socle (40) ; et **caractérisé par** un moyen d'amortissement (90) permettant de restreindre la vitesse de mouvement de ladite partie tête (50).

2. Batteur sur pied selon la revendication 1, dans lequel le moyen d'amortissement (90) est adapté pour restreindre la vitesse de mouvement de ladite partie tête (50) sur au moins une partie majeur dudit mouvement.

3. Batteur sur pied selon la revendication 1 ou la revendication 2, dans lequel le moyen d'amortissement (90) comporte un amortisseur hydraulique (92, 94, 96).

4. Batteur sur pied selon la revendication 3, dans lequel l'amortisseur (90) comporte un piston (92) mobile dans un logement tubulaire (94) qui contient une fluide hydraulique (96) ; le piston (92) et le logement (94) étant accouplés respectivement à la partie tête (50) et à une autre partie dudit boîtier (20), ou vice versa.

5. Batteur sur pied selon l'une quelconque des revendications précédentes, comprenant par ailleurs des moyens (98, 100) pour inhiber l'action d'amortissement du moyen d'amortissement (90) quand la partie tête (50) est ramenée vers ladite position de fonctionnement.

6. Batteur sur pied selon la revendication 4 et la revendication 5, comportant par ailleurs un passage de dérivation (98) au travers dudit piston (92) pour ledit fluide (96) et une plaque porte-soupape (100) adaptée pour fermer ledit passage (98) quand la partie tête (50) se déplace à distance dudit socle (40) et hors de la position de fonctionnement.

7. Batteur sur pied selon l'une quelconque des revendications précédentes, dans lequel ledit moyen d'amortissement (90) et ledit moyen élastique (80) sont situés de manière contiguë dans une partie généralement verticale (60) dudit boîtier (20).

8. Batteur sur pied selon la revendication 7, dans lequel un espace permettant de recevoir ledit moyen d'amortissement (90) et ledit moyen élastique (80) dans ladite partie généralement verticale (60) du boîtier est mis en oeuvre en logeant ledit moteur dans la partie tête (50) du batteur sur pied (10).

9. Batteur sur pied selon l'une quelconque des revendications précédentes, dans lequel ledit moyen d'amortissement (90) est adapté pour procurer différents degrés d'amortissement en différents points dudit mouvement.
